# EUROPEAN PATENT SPECIFICATION

(11) **EP 1 442 949 B1**
(45) Date of publication and mention of the grant of the patent: **02.07.2008**
(21) Application number: 03002333.7
(22) Date of filing: 03.02.2003
(51) Int. Cl.: B60R 25/04

(54) **Key block circuit**
Elektrische Schlüsselsperre
Circuit de blocage de clé

(43) Date of publication of application: 04.08.2004
(73) Proprietor: Ford Global Technologies, LLC, Dearborn, MI 48126 (US)
(72) Inventor: Richardsson, Carl, 431 50 Mölndal (SE); Moradnia, Mohammad, 416 7 Göteborg (SE)
(74) Representative: Egeröd, Lisbeth

(56) References cited:
- EP-A- 0 846 820
- EP-A- 1 148 189
- DE-A- 10 057 005
- DE-A- 19 821 899

## Description

### Field of the invention

The invention relates to an ignition locking system for motor vehicles, wherein the ignition switch is locked/unlocked by an electromechanical locking device operated by an electronic ignition key to increase the theft protection.

### Background of the invention

One cause of the theft of motor vehicles has been the ability for an ignition key to be acquired or reproduced. For example, a thief might obtain a reproduction of a key by taking an impression of the key or by reading the code number engraved on the key. Various measures have been proposed for reducing the risk that an unduly acquired key is used to start the vehicle. For example, it has been proposed to omit any engraving of code numbers on the keys or to supply keys with tracks that can not be easily reproduced etc. Another proposed alternative is to use keys with an electronically stored security code for locking/unlocking the vehicle ignition system, hereinafter called "electronic ignition key or simply electronic key". In this connection it has been proposed to use the electronic ignition key to lock/unlock the vehicle ignition system but also to lock/unlock the vehicle starter motor, the fuel supply and even to lock/unlock the ignition switch itself.

In general, when locking/unlocking the ignition switch it is known to provide the switch with a cylinder having a recess into which a spring-biased plunger of an electromagnet projects to lock the switch when the electromagnet is inactive, i.e. when no current flows through the coil of the electromagnet. Said electromagnet may be activated to retract the plunger and unlock the ignition switch in various ways, e.g. by a wireless remote control adapted for the particular purpose to unlock the ignition switch, or adapted for the more general purpose to activate/deactivate a comprehensive theft alarm arranged in the vehicle.

However, in some applications it may be preferred if the ignition switch remains locked even when the vehicle theft alarm has been deactivated by a remote control, e.g. to create extra security. Further, it may be preferred to supply a vehicle with the possibility to have the ignition switch locked/unlocked without the need of a remote control, e.g. in situations when the remote control is misplaced or when its batteries are empty. Also, a remote control may be superfluous if the particular vehicle is used without a more comprehensive theft alarm.

To preserve flexibility, but also to receive extra security and to exclude any dependency of remote controls or similar etc, it is common to use an electronic ignition key, which accommodates an electronically stored security code to unlock the vehicle ignition switch.

To preserve the vehicle battery power when an electronic ignition key is used it is preferred to power down the vehicle circuitry which communicates with the key, but also the electromagnet that retracts the plunger. Said vehicle circuitry and the electromagnet are therefore usually powered down until a key is inserted in the ignition switch. Said circuitry is consequently powered up when a driver eventually inserts a key in the ignition lock. The circuitry then starts to communicate with the electronic key to verify if the key can be approved. Subsequently, the electromagnet is energised if the key is approved, which electromagnet then retracts the spring-biased plunger from the recess in the ignition switch cylinder. The ignition switch is hereby released and the driver may turn the ignition key and the ignition switch, e.g. to energise the vehicle ignition system and then start the vehicle engine.

An electronic ignition key, a method and a system as now described is previously known, e.g. from the patent documents DE 198 21 899, EP 0 846 820 A1, DE 100 57 005 A1 and WO 95/09748 A1. The patent DE 198 21 899 which corresponds to the preamble of claim 1 discloses an ignition locking system; see e.g. Fig. 1 and col. 2 lines 24-60 in D1. As can be seen in e.g. Fig. 1, the ignition locking system in D1 comprises an ignition-starter switch 10, inter alia comprising a rotatable component 12 for receiving an ignition key 20. A rotatable disk 34 is connected to the rotatable component 12 via a spring 36. The rotatble disk 34 is in turn coupled to a fixed component 16 via a blocking arrangement 38, 40, 42. The blocking arrangement 38, 40, 42 releases the rotatable disk 34 from the fixed component 16 upon an approval of an inserted ignition key 20. A switching device 30, 32 may then be actuated by rotation of the released rotatable disk 34, which disk 34 is rotated via the spring 36 that connects the disk 34 to the component 12, which component 12 in turn is rotated by a turning of the approved key 20 inserted into the component 12. For the purpose of saving energy, i.e. to preserve the vehicle battery power, the electromagnet according to these documents is only powered up within a predefined time interval. Consequently, the spring-biased plunger is only retracted within said predefined time interval and then released again. However, to retract the plunger during a predefined time interval may be functionally uncertain. The function of the ignition switch may be obstructed, e.g. if the driver turns the ignition key a long time after it has been inserted into the ignition switch, or if the driver turns the key very slowly. The chosen time period may then be insufficient, with the consequence that the plunger is released to project into the cylinder recess again and driver will find the ignition switch blocked. One solution to this problem may be to increase the time interval during which the electromagnet is active, which may guaranty that the driver has turned the ignition key before the plunger is released. However, according to this solution the electro magnet may be active for a very long time, which is inconsistent with the wish to save energy. This solution is therefore not optimal.

Another solution is known from the patent document DE 197 36 651 C1, wherein there still is a risk that the plunger may not have been retracted, but in this case if the driver turns the inserted ignition key very soon after insertion. However, the spring-biased plunger is released when the ignition key has been turned beyond a certain angle. The plunger is then released towards a part of the ignition switch cylinder without a recess, wherein the plunger otherwise could have projected and blocked the turning of the ignition switch. Consequently, the electromagnet in this solution may be inactivated as soon as the driver has turned the ignition switch in a suitable angle, which preserves the vehicle battery power. Further, the function of the ignition switch is maintained, even if the driver turns the ignition key long after it has been inserted into the ignition switch or if the driver turns the key very slowly. In which case the electromagnet keeps the spring-biased plunger retracted until it can be safely released, e.g. until the ignition switch cylinder has been turned so that the plunger can be released towards such a part of the ignition switch cylinder which has no recess.

However, according to DE 197 36 651 C1 and the other patent documents referred to above the spring-biased plunger of the electromagnet is directly retracted once the electronic ignition key has been inserted in the ignition switch and the security code has been approved. This is a problem if the electromagnet only powers down when the driver has turned the ignition switch a suitable angle, e.g. as in DE 197 36 651 C1. If the driver e.g. inserts the electronic ignition key without turning the key and then forgets to pull out the key when he leaves the vehicle or otherwise abandons the key in an inserted and unturned position, the electromagnet is continuously supplied with power until the key is eventually pulled out. This is obviously inconsistent with the wish to save energy. One solution to this problem is to only power up the electromagnet within a predefined time. However, this solution has other drawbacks, as discussed above.

To summarise, it is previously known that an ignition switch for a motor vehicle can be locked/unlocked by an electronic ignition key. It is also known that such ignition switches may be locked/unlocked by a spring-biased plunger of an electromagnet, wherein the switch is unlocked when the plunger is retracted by said electromagnet. According to prior art, the retraction occurs as soon as the ignition key has been inserted, but the retraction may be limited in time to save energy. Alternatively, the retraction may be limited to only occur only prior to a certain turning angle of the ignition switch being reached. However, known ignition switches do not guarantee that the turning of the electronic ignition key inserted in the ignition switch can be performed without obstruction and they do not in a satisfactory way take care of the situation when an inserted ignition key is abandoned in the ignition switch.

### Summary of the invention

The object of the present invention is to provide an improved ignition locking system for a motor vehicle, wherein the ignition switch can be locked/unlocked by an electronic ignition key comprising a security code, whereby the operation of the switch and the electronic ignition key consumes a minimum of vehicle battery power and where the unlocking is performed without obstruction.

An ignition locking system solving to the drawbacks of the prior art is disclosed in claim 1.

A driver using an electronic ignition key comprising a security code may operate an ignition switch according to the present invention. Said ignition switch is provided with a stop for interaction with a movable part of an electrical device, where the interaction locks/unlocks the ignition switch. The electrical device is normally inactivated to save battery power and the ignition switch is then locked by the movable part of the electrical device. The vehicle circuitry adopted to communicate with the ignition switch and the electronic ignition key is also normally inactivated to save battery power.

Once an ignition key has been inserted in the ignition switch the vehicle circuitry will try to communicate with the key and subsequently enable an activation of the electrical device, if the ignition key actually comprises an approved security code. Here it should be observed that the activation is only enabled and the electrical device is not actually activated until an inserted electronic ignition key is turned a certain angle. The electronic device then actuates its movable part to release the stop arranged on the ignition switch. This releases the ignition switch, which enables the driver to turn the inserted electronic ignition key further, e.g. to energise the vehicle ignition system and to subsequently start the vehicle engine. If the driver turns the inserted electronic ignition key a certain angle this will also deactivate the electrical device, but now in a way where its movable part will not stop a further turning of the ignition switch.

The solution to delay an activation of the electrical device until the inserted electronic ignition key is approved and turned a certain angel avoids the drawbacks associated with prior art, wherein an electromagnet is powered up directly when the electronic key has been approved.

As already indicated, the ignition switch according to the present invention is provided with a stop that interacts with the movable part of the electrical device in such a way that a key inserted into the ignition switch may be turned a certain angle before the turning is interrupted by the stop. In one embodiment of the present invention this gives more time for the electrical device to release its movable part from the stop without obstructing the turning of the switch.

The ignition switch as generally described above can be locked/unlocked by an electronic ignition key with a minimum of battery power consumption. Further advantages will appear from the following drawings and the following detailed description of the invention. However, the detailed description shall not be interpreted as imposing limitations on the invention. On the contrary, it shall i.a. be understood that various embodiments may use different electrical devices having one or several movable parts without departing from the invention. It shall also be understood that in particular the stop, but also the ignition switch and the electronic ignition key may be designed in many ways without departing from the invention.

### Brief description of the drawings

- Fig. 1: shows an ignition locking system according to an embodiment of the present invention, with a section through the ignition switch 200.
- Fig. 2: shows a section through an ignition switch according to an embodiment of the present invention.

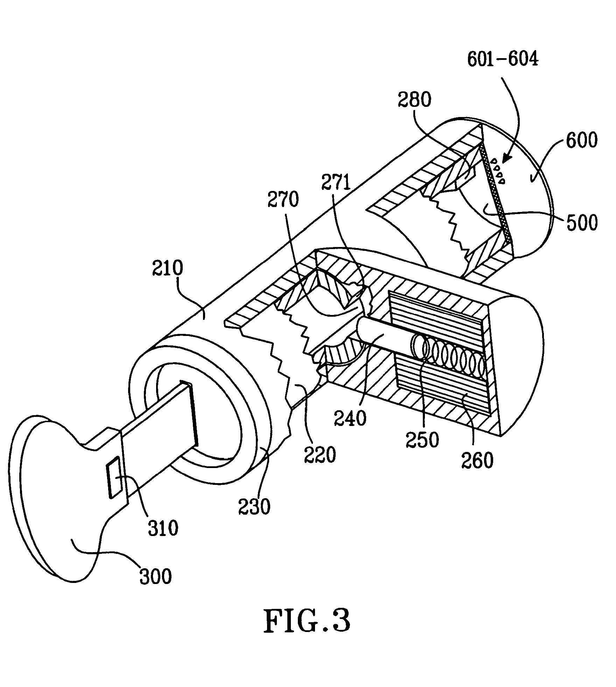

- Fig. 3: shows schematically a sectioned overview of an ignition switch according to an embodiment of the present invention.
- Fig. 4: shows schematically a sectioned overview of an ignition switch comprising electrical switches, implemented as sliding contacts with a sliding path and an associated trailing contact tip, and the turning angles during witch the electrical switches are closed according to an embodiment of the present invention.
- Fig. 5: shows a table of turning angles during witch the electrical switches of an ignition switch are closed according an embodiment of the present invention.

### Detailed description of preferred embodiments of the invention

As there is a need for an improved ignition locking system for a motor vehicle, where the system can be operated by an electronic ignition key, which operation consumes a minimum of battery power and where the turning of the electronic key inserted in the ignition switch can be performed without obstruction, an embodiment of such an ignition locking system shall be described in more detail below.

A motor vehicle ignition locking system 100 according to this embodiment of the present invention comprises a control unit 110, an antenna unit 120 and an ignition switch 200, which ignition switch 200 can be operated by an electronic ignition key 300. The ignition locking system 100 is supplied with power from the vehicle battery 400.

### The Ignition Switch

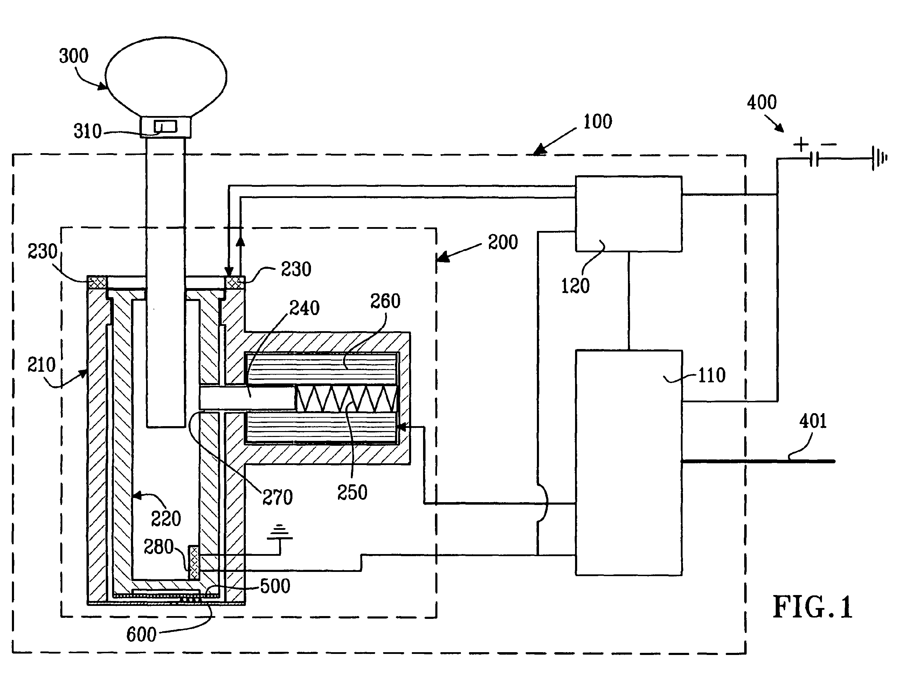

As shown in fig. 1 the ignition locking system 100 comprises an ignition switch 200, which comprises a housing 210. Said housing 210 accommodates a ignition switch cylinder 220, which is arranged to be turnable in the ignition switch turning direction 290 and arranged to receive an electronic ignition key 300.

The ignition switch housing 210 also accommodates an electromagnet with a coil 260, a spring 250 and a retractable plunger 240. The plunger 240 is cylinder-shaped and spring-biased by the spring 250 to project into a recess 270 arranged in the cylinder 220.

The recess 270 is shaped as an elongated groove dimensioned to receive the plunger 240, where the recess 270 extends in a radial direction alongside the wall of the cylinder 220. More precisely, the recess 270 begins where the plunger 240 projects into the cylinder 220, when the cylinder 220 is unturned. Then the recess 270 extends for about 31° in the opposite direction of the ignition turning direction 290, with addition for an angle θ preferably corresponding to the half diameter of plunger 240. This enables a potential driver to insert an arbitrary but fitting key into the ignition switch 200 and turn the inserted key about 31° before the turning is stopped by the plunger 240 engaging the end of the recess 270, i.e. engaging the recess stop 271. However, in another embodiment of the present invention said turning may be stopped by the plunger 240 at some other angle, as the recess 270 in that embodiment may extend more or less than 31°, with addition for an angle θ preferably corresponding to half the diameter of plunger 240.

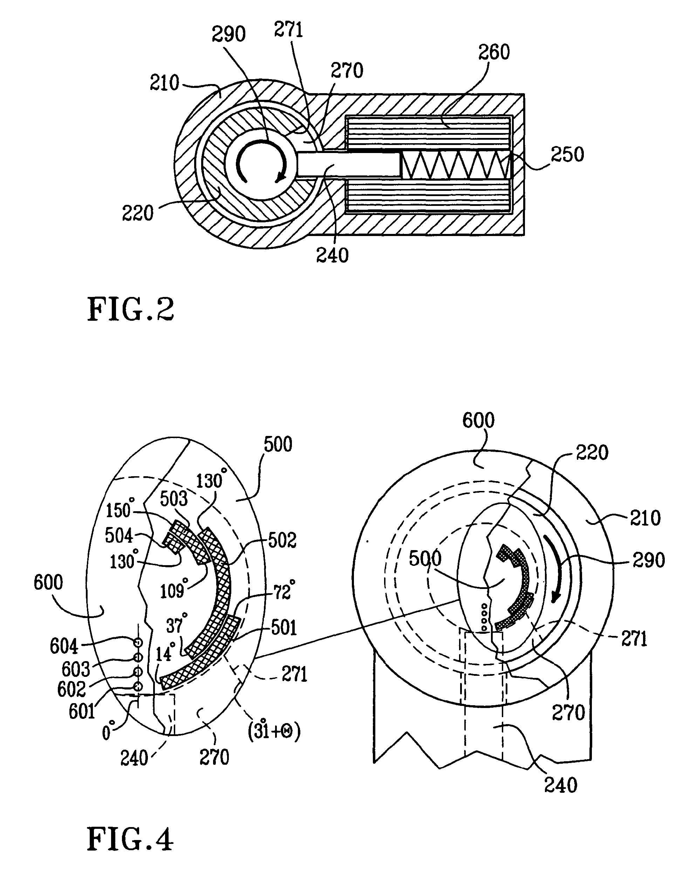

The ignition switch 200 according to the present embodiment also comprises several electrical switches, arranged to distribute power to different functions in the vehicle. As show in fig. 4 said switches are implemented as sliding contacts, each contact having a sliding path 501-504 arranged on a first laminate 500 attached to the bottom of the turnable ignition cylinder 220. Each sliding path 501-504 has in turn an associated contact tip 601-604 arranged on a second laminate 600 attached to the bottom of the ignition switch housing 210. Said sliding paths 501-504 are actuated when the cylinder 220 is turned in the ignition turning direction 290.

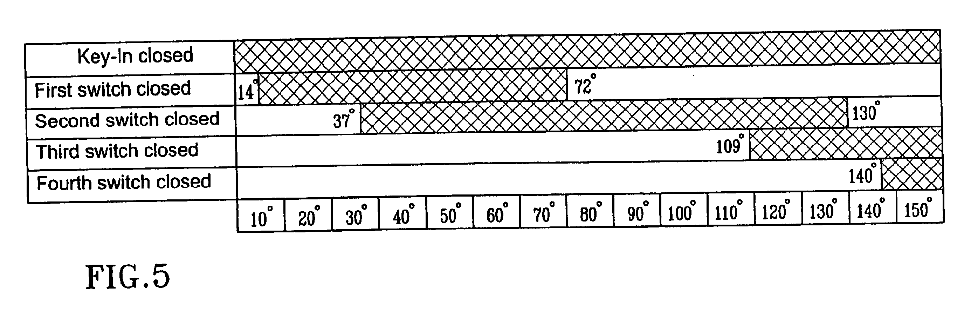

As schematically illustrated by the table of turning angles in fig. 5, and the sliding paths 501-504 with its associated trailing contacts tips 601-604 as shown in fig. 4, there are preferably four electrical switches arranged to distribute power within four successive turning angles. A first switch in this embodiment is arranged to distribute power to the coil 260 of the electromagnet when the cylinder 220 is turned within 14°-72°. A second switch in this embodiment is arranged to distribute power to the general vehicle electrical functions when the cylinder 220 is turned within 37°-130°. The general vehicle functions may e.g. be instrumentation light, compartment fan, vehicle floodlights etc. A third switch is arranged to distribute power to the vehicle ignition system when the ignition switch is turned 109°-150°. A fourth switch is arranged to distribute power to the vehicle cranking motor when the ignition switch is turned within 140°-150°, which cranking motor starts the vehicle engine. However, in another embodiment of the present invention other type of switches may be used, which distributes power at other turning angles.

Further, the ignition switch housing 210 according to the present embodiment comprises an antenna coil 230 designed as a circle arranged on the top of the ignition switch housing 210 to closely surround an inserted electronic key 300. Electrical terminals (not shown) are arranged on each side of an opening in the circle formed by the antenna coil 230 to enable a connection of the antenna coil 230 to the antenna unit 120. The material and the constitution of the antenna coil 230 are adapted for enabling a wireless communication between an electronic ignition key and the vehicle circuitry.

The ignition switch housing 210 also comprises a key-in switch 280, which is closed when a fitting key is inserted in the cylinder 220. Said key-in switch 280 supplies power to the control unit 110 and antenna unit 120 when it is closed. As shown in fig. 1 the key-in switch 280 may be positioned at the base of the ignition cylinder 220. However, it is preferred that the key-in switch 280 is positioned at the top or near the top of the cylinder 220. This has the advantage that the key-in switch 280 will be affected immediately when a key starts to enter the ignition cylinder 220, which enables a faster power up of the control unit 110 and the antenna unit 120.

As already indicated, the invention is not limited to an ignition switch 200 as now described. On the contrary, the electromagnet and plunger 240 may be replaced by another electrically controllable device comprising a movable part. Similar, the recess 270 may e.g. be replaced by a protruding arrangement, as long as the same function is achieved. Also, the trailing contacts with its tips 601-604 and associated sliding paths 501-504 may be replaced with another suitable switching arrangement without departing from the invention.

### The Antenna, Antenna unit and Electronic Ignition Key

As shown in fig. 1 the ignition locking system 100 according to this embodiment comprises an antenna unit 120. Although fig. 1 shows the antenna unit 120 as a separate unit, it shall be understood that the antenna unit 120 may be incorporated in the control unit 110 or another suitable unit without departing from the invention.

The antenna unit 120 is supplied with power from the vehicle battery 400. The unit 120 is therefore connected to the positive pole of the vehicle battery 400 to receive a voltage. Said voltage may be adjusted by a voltage regulator or similar before it is used by the circuitry in the control unit 120. The antenna unit 120 is furthermore connected to the key-in switch 280, which in a closed position connects the unit 120 to the negative pole of the vehicle battery 400 and the unit 120 is hereby powered up. In addition, the antenna unit 120 is connected to the antenna coil 230 and the control unit 110.

Said antenna unit 120 is preferably embodied as an electronic unit, which comprises a radio electronic circuitry for transmitting, receiving and processing a modulated frequency. The antenna unit 120 also comprises an interfacing circuitry for communicating with other vehicle units and a microprocessor with an associated memory for storing software, which at least is programmed to control the communication between the antenna unit 120, the antenna coil 230 and the electronic ignition key 300. Said communication enables the antenna unit 120 to extract the security code embodied in an electronic ignition key 300. A custom designed integrated circuit or some other circuitry may in an alternative embodiment replace the microprocessor and its associated memory, provided that the same functionality is accomplished.

The antenna unit 120 according to this embodiment is commanded by the control unit 110 to supply a modulated carrier frequency of preferably 125 kHz to the antenna coil 230, where the frequency is generated by the radio electronic circuitry arranged in the antenna unit 120. Said antenna coil 230 then radiates a corresponding electromagnetic wave within a short distance from the coil 230. The radiated electromagnetic wave is received by an electronic ignition key 300 inserted in the ignition switch 200, i.e. received by the transponder 310 arranged on the electronic ignition key 300. The transponder 310 then reflects a modified electromagnetic wave, accommodating information about the specific security code associated with the inserted key 300. The antenna coil 230 receives said modified wave and transmits it back to the antenna unit 120. The antenna unit 120 then amplifies, demodulates and signal processes the received modified wave to extract the security code associated with the inserted electronic ignition key.

The communication between the antenna unit 120 and the electronic key 300 as now described may in an alternative embodiment be performed by optical means, e.g. infrared means. Infrared transceivers would then have to be arranged on the ignition switch 200 and the electronic ignition key 300 and the ignition key 300 would have to comprise electronic circuitry for storing and communicating the security code associated with the key 300. The electronic key 300 would also have to comprise a battery or some other energy source for supplying the electronic circuitry and the optical transceiver with power.

### The Control Unit

As shown in fig. 1 the ignition locking system 100 according to this embodiment comprises a control unit 110. Although fig. 1 shows the control unit 110 and the antenna unit 120 as separate units, it shall be understood that they may be incorporated in another unit or constitute a part of another unit arranged in the vehicle, e.g. an unit comprising the general ignition system.

The control unit 110 is preferably embodied as an electronic unit, which e.g. comprises interfacing circuitry for communicating with other vehicle units, a microprocessor and memory for storing of software, which at least is programmed to operate the ignition locking system 100. In addition, the control unit is preferably connected to the vehicle main bus system 401 for enabling communication with other vehicle systems, such as the main ignition system etc. The vehicle main bus system may be implemented by the use of any suitable bus system. However, is preferred to use a CAN-bus, which is a bus system well known in the area of automobile electronics.

The control unit 110 is supplied with power from the vehicle battery 400. The unit 110 is therefore connected to the positive pole of the vehicle battery 400 to receive a voltage. Said voltage may be adjusted by a voltage regulator or similar before it is used by the circuitry in the control unit 110. The control unit 110 is furthermore connected to the key-in switch 280, which in a closed position connects the control unit 110 to the negative pole of the vehicle battery 400 and the control unit 110 is hereby powered up.

Further, the control unit 110 is also connected to the antenna unit 120 for commanding said unit 120 to retrieve and subsequently deliver a security code associated with an electronic ignition key 300 that has been inserted in the ignition switch 200. The security code is verified when it has been retrieved and delivered to the control unit 110. The verification may e.g. be preformed through comparing the received key code with a code associated with the specific vehicle, which is pre-stored in the control unit 110. The inserted electronic ignition key 300 is then approved if the key code and the vehicle code are identical.

The approval of an inserted electronic ignition key 300, combined with the fact that the control unit 110 is connected to a first terminal of the electromagnet coil 260, permits the control unit 110 to enable an eventual powering up of the electromagnet coil 260 by connecting the first terminal of the coil 260 to the positive pole of the vehicle battery. Further, a second terminal (not shown) of the electromagnet coil 260 is connected to the ignition switch 200. The ignition switch 200 will then subsequently connect the second terminal to the negative pole of the vehicle battery 400, when the electronic ignition key 300 and the ignition switch cylinder 220 has been turned preferably 14° in the ignition turning direction 290. This will energise the electromagnet coil 260, which electromagnet then retracts the plunger 240. Said ignition switch connection is preferably accomplished by the first electrical switch comprised by the ignition switch 200 according to this embodiment, which first electrical switch comprises a contact tip 601 and a sliding path 501 as shown in fig. 4.

However, the electromagnet coil 260 may in an alternative embodiment have its second terminal connected directly to the negative pole of the vehicle battery, i.e. without any intermediary switch that has to be closed. A turning angle sensor (not shown) is then arranged on the ignition switch 200 to report the present turning angle of the ignition cylinder 220 to the control unit 110. The control unit 110 then connects said first terminal of the electromagnet coil 260 to the positive pole of the vehicle battery when the electronic ignition key 300 has been approved and the angle sensor reports that the cylinder 220 has been turned 14°. This will energise the coil 260 of the electromagnet, which electromagnet then retracts the plunger 240.

### Operation of the Ignition Locking System

The ignition locking system 100 according to a preferred embodiment of the present invention is activated when the key-in switch 280 is closed by the insertion of a fitting key into the ignition switch cylinder 220. The control unit 110 and the antenna unit 120 are then powered up, whereupon the control unit 110 commands the antenna unit to retrieve the security code that is embodied in the transceiver 310, which is arranged on a proper electronic ignition key 300. The retrieved security code is communicated from the antenna unit 120 to the control unit 110, which then verifies the security code by comparing it with a security code associated with the specific motor vehicle.

The ignition locking system 100 then remains locked if the inserted key is an ordinary key without a security code or if the key is a proper electronic ignition key 300, though with a security code that is not approved. The aspirant driver may then only turn the inserted key about 31° before the turning is stopped by the plunger 240 engaging the end of the recess 270, i.e. the recess stop 271.

However, the ignition locking system 100 is unlocked if the key code and the vehicle code are identical or if the key code is otherwise approved. The unlocking of the ignition locking system is then accomplished in two steps. The first step is accomplished by the control unit 110, which connects the first terminal of the electromagnet coil 260 to the positive pole of the vehicle battery. The second step is accomplished by the ignition switch 200, which connects the second terminal of the electromagnet coil 260 to the negative pole of the vehicle battery when the electronic key 300 and the ignition cylinder 220 has been turned about 14°. The electromagnet is then activated and the plunger 240 is retracted from the recess 270, arranged in the ignition switch cylinder 220. This releases the ignition cylinder 220, which then can be turned further by the driver e.g. to power up the general vehicle electrical functions, the vehicle ignition system and eventually to power-up the vehicle cranking motor to start the vehicle engine. If the driver turns the ignition about 72° this will also result in a power down of the electromagnet coil 260, whereupon the spring-biased plunger 240 is released towards a part of the ignition switch cylinder 220 without any recess 270 that may affect the turning of the ignition switch cylinder 220.

To summarise, the operation of the ignition locking system and the ignition switch according to this invention provides that the electromagnet coil 260 is not supplied with power if a driver leaves the ignition key 300 inserted without turning it around, e.g. forgets to pull out the key when he leaves the vehicle or otherwise abandons the key in an inserted and unturned position. Also, the recess 270, which extends radially alongside the wall of the cylinder 220 gives more time for the ignition locking system 100 to retract the plunger 240 from the recess 270 without obstructing the turning of the ignition switch cylinder 220.

### Reference signs

- 100: Ignition locking system
- 110: Control unit
- 120: Antenna unit
- 200: Ignition switch
- 210: Ignition switch housing
- 220: Ignition switch cylinder
- 230: Antenna coil / Transceiver
- 240: Plunger
- 250: Spring
- 260: Electromagnet coil
- 270: Recess
- 271: Recess stop
- 280: Key-in switch
- 290: Ignition turning direction
- 300: Electronic ignition key / Electronic key
- 310: Transponder / Transceiver
- 400: Vehicle battery
- 401: Vehicle main bus system
- 500: First laminate
- 501: Electrical sliding path
- 502: Electrical sliding path
- 503: Electrical sliding path
- 504: Electrical sliding path
- 600: Second laminate
- 601: Contact tip
- 602: Contact tip
- 603: Contact tip
- 604: Contact tip

## Claims

1. An ignition locking system (100) for a vehicle comprising:
- an ignition switch (200) operable to be actuated by a key (300), said key (300) being provided with a key code;
- a first electronic control unit (110) operable to communicate with said key (300) for retrieving and verifying said key code;
wherein said ignition switch (200) comprises:
- a housing (210) and a turnable member (220) mounted within the housing (210), said turnable member (200) being operable to receive said key (300);
- an electromagnetic device (260) comprising a movable part (240) operable to impose an angular turning restriction on said turnable member (220) when the electromagnetic device (260) is not energized, and operable to project into a recess (270) included within the turnable member (220), said recess (271) defining said angular turning restriction, and said electromagnetic device (260), when energized, is operable to actuate said movable part (240) to disengage said movable part (240) from said recess (270) to remove said turning restriction from the turnable member (220), said energizing being dependent on; a key code of a key (300) inserted into the turnable member (220) being retrieved and approved by said first control unit (110),
***characterized in that***:
said energizing being further dependent on that the turnable member (220) is turned by a rotation of said inserted key (300) beyond a first angle in a rotation direction required for activating an ignition of the vehicle.

2. An ignition locking system (100) as claimed in claim 1 wherein:
said electromagnetic device (260), when not energized, being operable to remain engaged with said recess (270) to restrict the turning of the turnable member (220) through the movable part (240) engaging a stop (271), when said key code is disapproved and the turnable member (220) is turned beyond a second angle in the ignition turning direction (290).

3. An ignition locking system (100) as claimed in claim 2 wherein:
said first angle is smaller than said second angle.

4. An ignition locking system (100) as claimed in claim 2 wherein:
the stop (271) is arranged on the turnable member (220), and the electromagnetic device (260) comprising a movable part (240) is arranged on the housing (120).

5. An Ignition locking system (100) as claimed in claim 2 wherein:
the stop (271) is arranged as a protruding member or as an end of said recess (270).

6. An ignition locking system (100) as claimed in claim 1 comprising:
an electrical switch (501, 601) arranged in the Ignition switch (200) to be closed when the turnable member (220) is turned beyond a first angle, where the first control unit (110) and the electrical switch (501, 601) are arranged so as to activate the electromagnetic device (260) provided that that; a key code of a key (300) inserted into the turnable member (220) being retrieved and approved by said first control unit (110), and the turnable member (220) being turned by a rotationof said inserted key (300) beyond a first angle in a rotation direction required for activating an ignition of the vehicle.

7. An ignition locking system (100) as claimed in claim 1 comprising:
an angle sensor arranged on the ignition switch (200) for sensing the turning angle of the turnable member (220), wherein the first control unit (110) is arranged to receive the sensed turning angle and to activate the electromagnetic device (260) provided that that; a key code of a key (300) Inserted into the turnable member (220) being retrieved and
approved by said first control unit (110), and the turnable member (220) being turned by a rotation of said inserted key (300) beyond a first angle in a rotation direction required for activating an ignition of the vehicle.

8. An ignition locking system (100) as claimed in claim 1 comprising:
a second electronic control unit (120) arranged to communicate with said first electronic control unit (110), and
a first transceiver (230) arranged to communicate with said second electronic control unit (120) and with a second transceiver (310) arranged on the key (300).

9. An ignition locking system (100) as claimed in claim 8 wherein:
the first transceiver (230) is arranged to communicate with a second transceiver (310) by electromagnetic waves or light waves.

10. An Ignition locking system (100) as claimed in claim 1 comprising:
a key-in switch (280) arranged to be closed when a key (300) is inserted in the turnable member (220), where at least the first electronic control unit (110) is arranged to be activated for retrieving and verifying said key code when the key-in switch (280) is closed.

11. An ignition locking system (100) as claimed in any of the claims above comprising:
an electromagnetic device arranged as a coil of an electromagnet (260).

12. An ignition locking system (100) as claimed in any of the claims above comprising:
a movable part arranged as a plunger (240) of an electromagnet (260).

13. A motor vehicle comprising:
an Ignition locking system (100) according to any of the claims above.

## Patentansprüche

1. Zündungsverriegelungssystem (100) für ein Fahrzeug, das umfasst:
- einen Zündschalter (200), der betreibbar ist, um durch einen Schlüssel (300) betätigt zu werden, wobei der Schlüssel (300) mit einem Schlüsselcode versehen ist;
- eine erste elektronische Steuereinheit (110), die betreibbar ist, um mit dem Schlüssel (300) zu kommunizieren, um den Schlüsselcode wiederzugewinnen und zu verifizieren;
wobei der Zündschalter (200) umfasst:
- ein Gehäuse (210) und ein in dem Gehäuse (210) angebrachtes drehbares Element (220), wobei das drehbare Element (200) betreibbar ist, um den Schlüssel (300) aufzunehmen;
- eine elektromagnetische Vorrichtung (260), die ein bewegliches Teil (240) aufweist, das betreibbar ist, um die Winkeldrehung des drehbaren Elements (220) zu beschränken, wenn die elektromagnetische Vorrichtung (260) nicht erregt ist, und betreibbar ist, um in eine in dem drehbaren Element (200) enthaltene Aussparung (270) vorzustehen, wobei die Aussparung (271) die ringförmige Drehbeschränkung definiert, und wobei die elektromagnetische Vorrichtung (260) dann, wenn sie erregt ist, betreibbar ist, um das bewegliche Teil (240) in der Weise zu betätigen, dass der Eingriff zwischen dem beweglichen Teil (240) und der Aussparung (270) gelöst wird, um das drehbare Element (220) von der Drehbeschränkung zu befreien, wobei die Erregung von einem Schlüsselcode eines in das drehbare Element (220) eingesteckten Schlüssels (300), der wiedergewonnen und durch die erste Steuereinheit (110) bestätigt wird, abhängt,
**dadurch gekennzeichnet, dass**
die Erregung ferner davon abhängt, dass das drehbare Element (220) durch eine Drehung des eingesteckten Schlüssels (300) in Drehrichtung über einen für die Aktivierung einer Zündung des Fahrzeugs erforderlichen ersten Winkel hinaus gedreht wird.

2. Zündungsverriegelungssystem (100) nach Anspruch 1, wobei:
die elektromagnetische Vorrichtung (260) dann, wenn sie nicht erregt ist, betreibbar ist, um in der Aussparung (270) in Eingriff zu bleiben, um das Drehen des drehbaren Elements (220) durch das mit einem Anschlag (271) in Eingriff befindliche bewegliche Teil (240) zu beschränken, wenn der Schlüsselcode nicht bestätigt wird und das drehbare Element (220) in der Zündungsdrehrichtung (290) über einen zweiten Winkel hinaus gedreht wird.

3. Zündungsverriegelungssystem (100) nach Anspruch 2, wobei:
der erste Winkel kleiner als der zweite Winkel ist.

4. Zündungsverriegelungssystem (100) nach Anspruch 2, wobei:
der Anschlag (271) an dem drehbaren Element (220) angeordnet ist und die elektromagnetische Vorrichtung (260), die ein bewegliches Teil (240) aufweist, an dem Gehäuse (120) angeordnet ist.

5. Zündungsverriegelungssystem (100) nach Anspruch 2, wobei:
der Anschlag (271) als ein vorstehendes Element oder als ein Ende der Aussparung (270) angeordnet ist.

6. Zündungsverriegelungssystem (100) nach Anspruch 1, das umfasst:
einen elektrischen Schalter (501, 601), der in dem Zündschalter (201) angeordnet ist, um geschlossen zu werden, wenn das drehbare Element (220) über einen ersten Winkel hinaus gedreht wird, wobei die erste Steuereinheit (110) und der elektrische Schalter (501, 601) so ausgelegt sind, dass die elektromagnetische Vorrichtung (260) aktiviert wird, wenn ein Schlüsselcode eines in das drehbare Element (220) eingesteckten Schlüssels (300) wiedergewonnen und durch die erste Steuereinheit (110) bestätigt wird und wenn das drehbare Element (220) durch eine Drehung des eingesteckten Schlüssels (300) in einer Drehrichtung über einen zum Aktivieren einer Zündung des Fahrzeugs erforderlichen ersten Winkel hinaus gedreht wird.

7. Zündungsverriegelungssystem (100) nach Anspruch 1, das umfasst:
einen Winkelsensor, der an dem Zündschalter (200) angeordnet ist, um den Drehwinkel des drehbaren Elements (220) zu erfassen, wobei die erste Steuereinheit (110) ausgelegt ist, um den erfassten Drehwinkel zu empfangen und um die elektromagnetische Vorrichtung (260) zu aktivieren, wenn ein Schlüsselcode eines in das drehbare Element (220) eingesteckten Schlüssels (300) wiedergewonnen und durch die erste Steuereinheit (110) bestätigt wird und wenn das drehbare Element (200) durch eine Drehung des eingesteckten Schlüssels (300) in einer Drehrichtung über einen für die Aktivierung einer Zündung des Fahrzeugs erforderlichen ersten Winkel hinaus gedreht wird.

8. Zündungsverriegelungssystem (100) nach Anspruch 1, das umfasst:
eine zweite elektronische Steuereinheit (120), die ausgelegt ist, um mit der ersten elektronischen Steuereinheit (110) zu kommunizieren, und
einen ersten Sender/Empfänger (230), der ausgelegt ist, um mit der zweiten elektronischen Steuereinheit (120) und mit einem an dem Schlüssel (300) angeordneten zweiten Sender/Empfänger (310) zu kommunizieren.

9. Zündungsverriegelungssystem (100) nach Anspruch 8, wobei:
der erste Sender/Empfänger (230) ausgelegt ist, um mit einem zweiten Sender/Empfänger (310) durch elektromagnetische Wellen oder Lichtwellen zu kommunizieren.

10. Zündungsverriegelungssystem (100) nach Anspruch 1, das umfasst:
einen Schlüssel-eingesteckt-Schalter (280), der ausgelegt ist, um geschlossen zu werden, wenn ein Schlüssel (300) in das drehbare Element (220) eingesteckt ist, wobei wenigstens die erste elektronische Steuereinheit (110) ausgelegt ist, um aktiviert zu werden, um den Schlüsselcode wiederzugewinnen und zu verifizieren, wenn der Schlüssel-eingesteckt-Schalter (280) geschlossen ist.

11. Zündungsverriegelungssystem (100) nach einem der obigen Ansprüche, das umfasst:
eine elektromagnetische Vorrichtung, die als eine Spule eines Elektromagneten (260) ausgelegt ist.

12. Zündungsverriegelungssystem (100) nach einem der obigen Ansprüche, das umfasst:
ein bewegliches Teil, das als eine Tauchspule (240) eines Elektromagneten ausgelegt ist.

13. Kraftfahrzeug, das umfasst:
ein Zündungsverriegelungssystem (100) nach einem der obigen Ansprüche.

## Revendications

1. Système (100) de verrouillage d'allumage pour un véhicule, comprenant :
- un commutateur d'allumage (200) destiné à être actionné par une clé (300), ladite clé (300) étant pourvue d'un code de clé ;
- une première unité de commande électronique (110) destinée à communiquer avec ladite clé (300) pour extraire et vérifier ledit code de clé ;
dans lequel ledit commutateur d'allumage (200) comprend :
- un boîtier (210) et un élément rotatif (220) monté dans le boîtier (210), ledit élément rotatif (220) étant destiné à recevoir ladite clé (300) ;
- un dispositif électromagnétique (260) comprenant une partie mobile (240) destinée à imposer une limitation angulaire à la rotation sur ledit élément rotatif (220) lorsque le dispositif électromagnétique (260) n'est pas alimenté, et destinée à faire saillie dans un évidement (270) ménagé dans l'élément rotatif (220), ledit évidement (270) définissant ladite limitation angulaire à la rotation, et ledit dispositif électromagnétique (260), lorsqu'il est alimenté, étant destiné à actionner ladite partie mobile (240) pour dégager ladite partie mobile (240) dudit évidement (270) pour annuler ladite limitation à la rotation de l'élément rotatif (220), ladite alimentation étant dépendante du fait qu'un code de clé d'une clé (300) insérée dans l'élément rotatif (220) a été extrait et approuvé par ladite première unité de commande (110),
***caractérisé en ce que*** ladite alimentation dépend en plus du fait que l'élément rotatif (220) tourne sous la rotation de ladite clé insérée (300) au-delà d'un premier angle dans un sens de rotation réclamé pour activer un allumage du véhicule.

2. Système de verrouillage d'allumage (100) selon la revendication 1, dans lequel ledit dispositif électromagnétique (260), lorsqu'il n'est pas alimenté, est destiné à rester engagé avec ledit évidement (270) pour limiter la rotation de l'élément rotatif (220) par l'engagement de la partie mobile (240) avec une butée (271), lorsque ledit code de clé est désapprouvé et que l'élément rotatif (220) est entraîné en rotation au-delà d'un deuxième angle dans le sens de rotation (290) de l'allumage.

3. Système de verrouillage d'allumage (100) selon la revendication 2, dans lequel ledit premier angle est plus petit que ledit deuxième angle.

4. Système de verrouillage d'allumage (100) selon la revendication 2, dans lequel la butée (271) est située sur l'élément rotatif (220) et le dispositif électromagnétique (260) comprenant une partie mobile (240) est situé sur le boîtier (210).

5. Système de verrouillage d'allumage (100) selon la revendication 2, dans lequel la butée (271) est agencée sous forme d'un élément saillant ou d'une extrémité dudit évidement (270).

6. Système de verrouillage d'allumage (100) selon la revendication 1, comprenant un commutateur électrique (501, 601) agencé dans le commutateur d'allumage (200) pour être fermé lorsque l'élément rotatif (220) est entraîné en rotation au-delà d'un premier angle, la première unité de commande (110) et le commutateur électrique (501, 601) étant agencés de manière à activer le dispositif électromagnétique (260) à condition qu'un code de clé d'une clé (300) insérée dans l'élément rotatif (220) soit extrait et approuvé par ladite première unité de commande (110), et que l'élément rotatif (220) soit entraîné en rotation par une rotation de ladite clé insérée (300) au-delà d'un premier angle dans un sens de rotation réclamé pour activer un allumage du véhicule.

7. Système de verrouillage d'allumage (100) selon la revendication 1, comprenant un capteur d'angle agencé sur le commutateur d'allumage (200) pour détecter l'angle de rotation de l'élément rotatif (220), dans lequel la première unité de commande (110) est prévue pour recevoir l'angle de rotation détecté et pour activer le dispositif électromagnétique (260) à condition qu'un code de clé d'une clé (300) insérée dans l'élément rotatif (220) soit extrait et approuvé par ladite première unité de commande (110), et que l'élément rotatif (220) soit entraîné en rotation par une rotation de ladite clé insérée (300) au-delà d'un premier angle dans un sens de rotation réclamé pour activer un allumage du véhicule.

8. Système de verrouillage d'allumage (100) selon la revendication 1, comprenant :
une deuxième unité de commande électronique (120) agencée pour communiquer avec ladite première unité de commande électronique (110), et
un premier émetteur-récepteur (230) agencé pour communiquer avec ladite deuxième unité de commande électronique (120) et avec un deuxième émetteur-récepteur (310) agencé sur la clé (300).

9. Système de verrouillage d'allumage (100) selon la revendication 8, dans lequel le premier émetteur-récepteur (230) est agencé pour communiquer avec un deuxième émetteur-récepteur (310) par ondes électromagnétiques ou par ondes lumineuses.

10. Système de verrouillage d'allumage (100) selon la revendication 1, comprenant un commutateur (280) à "clé insérée" agencé pour être fermé lorsqu'une clé (300) est insérée dans l'élément rotatif (220), dans lequel au moins la première unité de commande électronique (110) est prévue pour être activée pour extraire et vérifier ledit code de clé lorsque ledit commutateur (280) à "clé insérée" est fermé.

11. Système de verrouillage d'allumage (100) selon l'une quelconque des revendications précédentes, comprenant un dispositif électromagnétique agencé sous forme d'une bobine d'un électroaimant (260).

12. Système de verrouillage d'allumage (100) selon l'une quelconque des revendications précédentes, comprenant une partie mobile agencée sous forme d'un plongeur (240) d'un électroaimant (260).

13. Véhicule à moteur comprenant un système de verrouillage d'allumage (100) selon l'une quelconque des revendications précédentes.
